# EUROPEAN PATENT SPECIFICATION

(11) **EP 3 464 484 B1**
(45) Date of publication and mention of the grant of the patent: **29.07.2020**
(21) Application number: 17733214.5
(22) Date of filing: 25.05.2017
(51) Int. Cl.: C09D 5/24, C08F 290/06, C08G 65/329, C09D 171/02, C08G 65/332, C08F 299/02

(54) **WATER ABSORBING OR WATER SOLUBLE POLYMERS, INTERMEDIATE COMPOUNDS, AND METHODS THEREOF**
WASSERABSORBIERENDE ODER WASSERLÖSLICHE POLYMERE, ZWISCHENPRODUKTE UND VERFAHREN DAFÜR
POLYMÈRES ABSORBANT L'EAU OU SOLUBLES DANS L'EAU, COMPOSÉS INTERMÉDIAIRES, ET PROCÉDÉS ASSOCIÉS

(30) Priority: 03.06.2016 US 201662345334 P; 11.08.2016 US 201615234191; 31.01.2017 US 201762452543 P; 20.02.2017 US 201715437164; 29.03.2017 US 201715472379
(43) Date of publication of application: 10.04.2019
(73) Proprietor: Sirrus, Inc., Loveland, OH 45140 (US)
(72) Inventor: SULLIVAN, Jeffrey, M., Goshen, OH 45122 (US); DOSHI, Ami, Loveland, OH 45140 (US)
(74) Representative: Stolmár & Partner Patentanwälte PartG mbB
(86) International application number: PCT/US2017/034501
(87) International publication number: WO 2017/210084

(56) References cited:
- WO-A1-2013/149173
- WO-A2-2013/059473
- GB-A- 1 048 906

## Description

### FIELD

Disclosed are novel polymers and polymeric compositions comprising a first component including a polymer formed from polymerizing one or more monomers including a 1,1-diester-alkene attached to a second component that is a hydrophilic component. The hydrophilic component preferably includes a hydrophilic polymer or a hydrophilic functional group. Preferred polymers are water absorbing polymers or polymers that dissolve in water. Also disclose are intermediate compounds, and related methods. The grafted polymer may be used in a variety of applications including as a surfactant, an ionomer, an antifouling agent, for petroleum recovery, for water treatment, as a flocculant, for hydrometallurgy, as a detergent, in a pharmaceutical process, or any combination thereof.

### BACKGROUND

WO 2013/059473 A2 discloses the formation of multifunctional methylene malonates by the reaction of polytetrahyrofuran with an excess of diethylmethylene malonate. GB 1 048 906 A discloses an example of grafting a cyanoacrylate onto polyethylene glycol. WO 2013/149173 A1 discloses ink and coating compositions containing methylene malonates. Also disclosed are coatings based on methylene malonates on a number of substrates of different base plastics, including polyethylene glycols.

There is a need for new water absorbing polymer and new water soluble polymers for a variety of applications.

There is also a need for new hydrophilic polymers that are cross-linked so that they do not dissolve in water.

There is also a need for polymers capable of absorbing high levels of water.

### SUMMARY

One aspect of the teaching herein is directed at a grafted polymer comprising: a first component including a polymer formed by polymerizing one or more monomers including a 1,1-disubstituted-1-alkene compound, attached to a second component that is a hydrophilic component, wherein the hydrophilic component includes a cation or a water-soluble polymer.

This aspect of the invention may be further characterized by one or any combination of the following features: the polymer of the first component has a first end and a second end and backbone connecting the first and a second ends, the backbone including about 92 atomic percent or more carbon atoms; the hydrophilic component is a water-soluble polymer selected from the group consisting of a polyacrylamide, a polyvinyl alcohol, a polyacrylic acid, a polyalkoxide (e.g., a polyethylene glycol homopolymer or a polyethylene glycol copolymer), an water soluble amine containing polymer (e.g., polyamines, polyethyleneimines, and polymers including quaternary ammonium compounds), a copolymer of vinyl methyl ether and maleic anhydride, polyvinylpyrrolidone, a copolymer thereof, or any combination thereof; the second component includes a quaternary ammonium compound; the second component includes a polyalkoxide (preferably ethylene glycol homopolymer or copolymer); the polyalkoxide includes 65 weight percent or more ethylene oxide groups, based on the total weight of the polyalkoxide; the grafted polymer has a network structure (e.g., the grafted polymer is cross-linked, includes a multi-functional monomer, or the second component is attached to two or more 1,1-disubstituted-1-alkene compounds); the one or more monomers includes a multifunctional 1,1-disubstiuted-1-alkene monomer (e.g., a multifunctional macromer) having two or more polymerizable alkene groups; 20 atomic percent or more (preferably 30 atomic percent or more, more preferably 38 atomic percent or more, and most preferably 46 atomic percent or more) of the monomers of the first component are directly attached to the second component; the first component is present in an amount of 10 weight percent or more (preferably 15 weight percent or more, more preferably 20 weight percent or more, and even more preferably 30 weight percent or more), based on the total weight of the graft polymer; the second component is present in an amount of 20 weight percent or more (preferably 30 weight percent or more, and more preferably 40 weight percent or more), based on the total weight of the graft polymer; the total amount of the first component and the second component is 50 weight percent or more (preferably 70 weight percent or more, even more preferably 90 weight percent or more, and most preferably 97 weight percent or more), based on the total weight of the graft polymer; 10 atomic percent or more of the monomers of the first component are 1,1-diester-1-alkenes that are free of direct attachment to the hydrophilic component; the grafted polymer consists essentially of the first component consisting only of one or more 1,1-diester-1-alkene compounds, and the second component consisting only of the water-soluble polymer or the cation; the grafted polymer is associated with an anion; the anion includes a sulfonate ion or a sulfate ion; the 1,1-disubstituted-1-alkene compound includes one or more 1,1-diester-1-alkenes; the grafted polymer includes a sufficient amount of the second component so that the grafted polymer is water soluble; or the grafted polymer includes 30 to 95 weight percent of the water-soluble polymer, based on the total weight of the grafted polymer.

Preferably the 1,1-disubstituted-1-alkene compound is a compound having a structure: 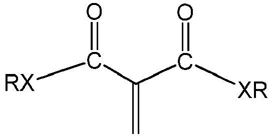 wherein R is a hydrocarbyl group which may contain one or more heteroatoms and X is oxygen or a direct bond (e.g, a methylene β-ketoester). More preferably, the 1,1-disubstituted-1-alkene compound is a methylene malonate having a structure: 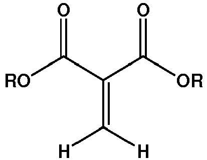 wherein R is separately in each occurrence alkyl, alkenyl, C₃-C₉ cycloalkyl, heterocyclyl, alkyl heterocyclyl, aryl, aralkyl, alkaryl, heteroaryl, or alkheteroaryl, or polyoxyalkylene, or both of the R's form a 5-7 membered cyclic or heterocyclic ring (preferably R is separately in each occurrence C₁-C₁₅ alkyl, C₂-C₁₅ alkenyl, C₃-C₉ cycloalkyl, C₂₋₂₀ heterocyclyl, C₃₋₂₀ alkheterocyclyl, C₆₋₁₈ aryl, C₇₋₂₅ alkaryl, C₇₋₂₅ aralkyl, C₅₋₁₈ heteroaryl or C₆₋₂₅ alkyl heteroaryl, or polyoxyalkylene, or both of the R groups form a 5-7 membered cyclic or heterocyclic ring).

Another aspect of the present teachings is directed at a polymeric composition including 10 weight percent or more of the grafted polymer according to the teachings herein, based on the total weight of the polymeric composition, and 0.5 to about 90 weight percent of one or more compounds selected from the group consisting of a filler, a stabilizer, a process aid, a biocide, a polymer, a colorant, a salt, and any combination thereof.

Another aspect of the present teachings is a polymerizable composition including a 1,1-disubstituted-1-alkene compound grafted to a water-soluble polymer for polymerizing the grafted polymer according to the teachings herein. The water-soluble polymer may be grafted to one, two or more 1,1-disubstituted-1-alkene compounds. The grafted 1,1-disubstituted-1-alkene compound may be grafted to one or two water-soluble polymers (e.g., at opposing ends of the 1,1-disubstituted-1-alkene compound). The 1,1-disubstituted-1-alkene compound may be grafted to one or two cations (e.g., at opposing ends of the 1,1-disubstituted-1-alkene compound). The polymerizable composition includes 20 weight percent or more of grafted 1,1-disubstituted-1-alkene compounds. The polymerizable composition may optionally include one or more 1,1-disubstituted-1-alkene compounds that are free of graft (e.g., free of cation and free of water-soluble polymer). The polymerizable composition and/or the graft polymer may include one or more cross-linkers. For example, the polymerizable composition may optionally include a multi-functional 1,1-disubstituted-1-alkene compound having two or more polymerizable alkene groups. The polymerizable composition may include a catalyst for accelerating a polymerization reaction of the 1,1-disubstituted-1-alkene compound (e.g., the grafted 1,1-diester-alkene compound).

Another aspect according to the teachings herein is a method of forming a grafted compound comprising a step of grafting a 1,1-diester-1-alkene compound with a quaternary ammonium compound or with a water-soluble polymer, wherein the grafting step is catalyzed by an acid catalyst (preferably a bronsted acid) or an enzymatic catalyst.

These aspects may be characterized by one or any combination of the following features;
the 1,1-diester-1-alkene is grafted on each of the esters; the grafting step includes a transesterification reaction; or the method includes a step of polymerizing the 1,1-diester-1-alkene compounds (preferably after the step of grafting).

Preferably, the water-soluble polymer is selected from the group consisting of a polyacrylamide, a polyvinyl alcohol, a polyacrylic acid, a polyalkoxide (e.g., a polyethylene glycol homopolymer or a polyethylene glycol copolymer), an water soluble amine containing polymer (e.g., polyamines, polyethyleneimines, and polymers including quaternary ammonium compounds), a copolymer of vinyl methyl ether and maleic anhydride, polyvinylpyrrolidone, a copolymer thereof, or any combination thereof.

Another aspect of the teachings herein is a method of forming a grafted polymer including a step of polymerizing a polymerizable composition taught herein. The polymerization reaction is catalyzed by tetramethylguanidine.

Another aspect of the teachings herein is a conductive polymeric composition comprising: a grafted polymer described herein doped with one or more salts at a concentration of 20 weight percent or more, based on the total weight of the composition.

Another aspect of the teachings herein is a coating comprising a grafted polymer as described herein.

For various applications, the grafted polymer preferably is cross-linked or has a network structure.

In various aspects, the grafted polymer may be water soluble and/or the grafted polymer may include a phase or component that is generally water soluble. For example, the polymer may include a water soluble polyalkoxide. To prevent the polymer from dissolving when exposed to water, the grafted polymer may have a sufficient amount of cross-linking (e.g, by employing a sufficient amount of a cross-linker) so that a network structure is formed. The amount of cross-linking preferably is sufficient so that the absorption of water by the polymer is constrained by the stretching of the polymer segments between crosslink sites.

### BRIEF DESCRIPTION OF DRAWINGS

FIG. 1A is an illustrative full scale H-NMR of transesterification of DEMM with polyethylene glycol PEG 300. Formation of new species can be confirmed in the 6.5 ppm methylene (double bond) region.
FIG. 1B is an illustrative H-NMR spectrogram of DEMM grafted with polyethylene glycol PEG 300 polyol and including unreacted DEMM showing two species in the 6.5 ppm region of the spectrum in 1A. The amount of the transesterified species is around 35 percent and the amount of unreacted DEMM is about 65 percent.
FIG. 2A is an illustrative H-NMR spectrogram of transesterification of DEMM with glycerol ethoxylate. Formation of new species can be confirmed in the 6.5 ppm methylene (double bond) region.
FIG. 2B is an illustrative H-NMR spectrogram showing the integration of the two species seen in the 6.5 ppm region of the spectrum in FIG. 2A. The amount of transesterified species is around 42% and the amount of unreacted DEMM is about 58 percent.

### DETAILED DESCRIPTION

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the teachings. The scope of the teachings should, therefore, be determined not with reference to the above description, but should instead be determined with reference to the appended claims, along with the full scope of equivalents to which such claims are entitled. Other combinations are also possible as will be gleaned from the following claims.

Unless defined otherwise, all technical and scientific terms used herein have the meaning commonly understood by a person skilled in the art to which this disclosure belongs. The following references provide one of skill with a general definition of many of the terms used in this disclosure: Singleton et al., Dictionary of Microbiology and Molecular Biology (2nd ed. 1994); The Cambridge Dictionary of Science and Technology (Walker ed., 1988); The Glossary of Genetics, 5th Ed., R. Rieger et al. (eds.), Springer Verlag (1991); and Hale & Marham, The Harper Collins Dictionary of Biology (1991).

Acid catalyst, as used herein, is an acidic species that catalyzes the transesterification reaction while minimizing or not contributing to side reactions. One or more as used herein means that at least one, or more than one, of the recited components may be used as disclosed. Nominal as used with respect to functionality refers to the theoretical functionality; generally, this can be calculated from the stoichiometry of the ingredients used. Heteroatom refer to atoms that are not carbon or hydrogen such as nitrogen, oxygen, sulfur, and phosphorus; heteroatoms may include nitrogen and oxygen. Hydrocarbyl, as used herein, refers to a group containing one or more carbon atom backbones and hydrogen atoms, which may optionally contain one or more heteroatoms. Where the hydrocarbyl group contains heteroatoms, the heteroatoms may form one or more functional groups well-known to one skilled in the art. Hydrocarbyl groups may contain cycloaliphatic, aliphatic, aromatic, or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl, and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. As used herein percent by weight or parts by weight refer to, or are based on, the weight or the compounds or compositions described unless otherwise specified. Unless otherwise stated parts by weight are based 100 parts of the relevant composition.

### First Component

The first component may be a homopolymer consisting substantially of or even entirely of a 1,1-disubstiuted-1-alkene compound, or a copolymer including one or more 1,1-disubsituted-1-alkene compounds. The copolymer may include two or more different 1,1-disubstituted-1-alkene compounds. The copolymer may include a monomer that is not a 1,1-disubstituted-1-alkene compound, but is capable of copolymerizing with the 1,1-disubstituted-1-alkene compound. The copolymer may be a random copolymer or a block copolymer. Some or all of the 1,1-disubstituted-1-alkene compound is attached to the second component. The first component may include a cross-linker for cross-linking the copolymer of the first component and/or for forming a network structure.

### 1,1-Disubstituted-1-Alkene Compound

The composition disclosed include 1,1-disubstituted-1-alkene compounds which preferably are 1,1-dicarbonyl substituted alkene compounds. Preferred 1,1-dicarbonyl substituted alkene compounds are 1,1-dicarbonyl substituted ethylene compounds. 1,1-dicarbonyl substituted ethylene compounds refer to compounds having a carbon with a double bond attached thereto and which is further bonded to two carbonyl carbon atoms. Exemplary compounds are shown in Formula 1: 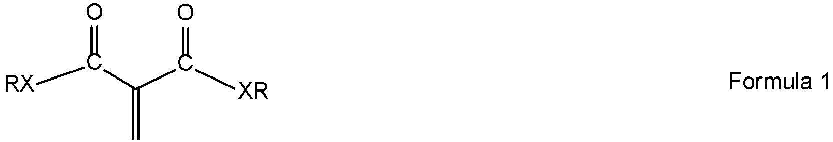 wherein R is a hydrocarbyl group which may contain one or more heteroatoms and X is oxygen or a direct bond (such as a methylene β-ketoester). Exemplary classes of 1,1-dicarbonyl substituted ethylenes are the methylene malonates, methylene beta-keto ester or diketones. Methylene malonates are exemplified by Formula 2: 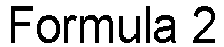 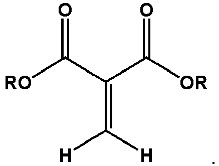 R may be separately in each occurrence alkyl, alkenyl, C₃-C₉ cycloalkyl, heterocyclyl, alkyl heterocyclyl, aryl, aralkyl, alkaryl, heteroaryl, or alkheteroaryl, or polyoxyalkylene, or both of the R's form a 5-7 membered cyclic or heterocyclic ring. R may be separately in each occurrence C₁-C₁₅ alkyl, C₂-C₁₅ alkenyl, C₃-C₉ cycloalkyl, C₂₋₂₀ heterocyclyl, C₃₋₂₀ alkheterocyclyl, C₆₋₁₈ aryl, C₇₋₂₅ alkaryl, C₇₋₂₅ aralkyl, C₅₋₁₈ heteroaryl or C₆₋₂₅ alkyl heteroaryl, or polyoxyalkylene, or both of the R groups form a 5-7 membered cyclic or heterocyclic ring. The recited groups may be substituted with one or more substituents, which do not interfere with the reactions disclosed herein. Preferred substituents include halo alkylthio, alkoxy, hydroxyl, nitro, azido, cyano, acyloxy, carboxy, or ester. R may be separately in each occurrence C₁-C₁₅ alkyl, C₃-C₆ cycloalkyl, C₄₋₁₈ heterocyclyl, C₄₋₁₈ alkheterocyclyl, C₆₋₁₈ aryl, C₇₋₂₅ alkaryl, C₇₋₂₅ aralkyl, C₅₋₁₈ heteroaryl or C₆₋₂₅ alkyl heteroaryl, or polyoxyalkylene. R may be separately in each occurrence a C₁₋₄ alkyl. R may be separately in each occurrence methyl or ethyl. R may be the same for each ester group on the 1,1-dicarbonyl substituted ethylenes. Exemplary compounds are dimethyl, diethyl, ethylmethyl, dipropyl, dibutyl, diphenyl, and ethyl-ethyl gluconate malonates; or dimethyl and diethyl methylene malonate (R is either methyl or ethyl).

The 1,1-dicarbonyl substituted ethylene compounds disclosed herein exhibit a sufficiently high purity so that it can be polymerized. The purity of the 1,1-dicarbonyl substituted ethylenes may be sufficiently high so that 70 mole percent or more, preferably 80 mole percent or more, more preferably 90 mole percent or more, even more preferably 95 mole percent or more, and most preferably 99 mole percent or more of the 1,1-dicarbonyl substituted ethylenes is converted to polymer during a polymerization process. The purity of the 1,1-dicarbonyl substituted ethylenes is about 96 mole percent or greater, about 97 mole percent or greater, about 98 mole percent or greater, about 99 mole percent or greater, or about 99.5 mole percent or greater, based on the total weight of the 1,1-dicarbonyl substituted ethylenes. The 1,1-dicarbonyl substituted ethylenes contain 4 mole percent or less of 1,1-dicarbonyl substituted-1,1 bis (hydroxymethyl)-methanes, 3 mole percent of less of 1,1-dicarbonyl substituted-1,1 bis (hydroxymethyl)-methanes, 2 mole percent of less of 1,1-dicarbonyl substituted-1,1 bis (hydroxymethyl)-methanes, 1 mole percent of less of 1,1-dicarbonyl substituted-1,1 bis (hydroxymethyl)-methanes, or 0.5 mole percent of less of 1,1-dicarbonyl substituted-1,1 hydroxymethyl-methanes. The concentration of any impurities containing a dioxane group preferably is about 2 mole percent or less, more preferably about 1 mole percent or less, even more preferably about 0.2 mole percent or less, and most preferably about 0.05 mole percent or less, based on the total weight of the 1,1-dicarbonyl substituted ethylenes. The total concentration of any impurity having the alkene group replaced by an analogous hydroxyalkyl group (e.g., by a Michael addition of the alkene with water) preferably is about 3 mole percent or less, more preferably about 1 mole percent or less, even more preferably about 0.1 mole percent or less, and most preferably about 0.01 mole percent or less, based on the total moles in the 1,1-dicarbonyl substituted ethylenes. Preferred 1,1-dicarbonyl substituted ethylenes are prepared by a process including one or more (e.g., two or more) steps of distilling a reaction product or an intermediate reaction product (e.g., a reaction product or intermediate reaction product of a source of formaldehyde and a malonic acid ester).

The functional compound may include one or more methylene malonates which may be the same or different.

The 1,1-disubstituted-1-alkene compound may include one or any combinations of the 1,1-disubstitued alkene compounds and 1,1-disubstituted ethylene compounds disclosed in U.S. Patent No. 9,249,265 B1, issued February 2, 2016 (see e.g., column 5, line 44 through column 10, line 30).

Particularly preferred monomers include methyl propyl methylene malonate, dihexyl methylene malonate, di-isopropyl methylene malonate, butyl methyl methylene malonate, ethoxyethyl ethyl methylene malonate, methoxyethyl methyl methylene malonate, hexyl methyl methylene malonate, dipentyl methylene malonate, ethyl pentyl methylene malonate, methyl pentyl methylene malonate, ethyl ethylmethoxy methylene malonate, ethoxyethyl methyl methylene malonate, butyl ethyl methylene malonate, dibutyl methylene malonate, diethyl methylene malonate (DEMM), diethoxy ethyl methylene malonate, dimethyl methylene malonate, di-N-propyl methylene malonate, ethyl hexyl methylene malonate, methyl fenchyl methylene malonate, ethyl fenchyl methylene malonate, 2-phenylpropyl ethyl methylene malonate, 3-phenylpropyl ethyl methylene malonate, and dimethoxy ethyl methylene malonate.

The 1,1-disubstituted-1-alkene compound may be a compound prepared by a transesterification, such as described in U.S. Provisional Patent Application No. 62/421,754, filed on November 14, 2016.

### Cross-Linker

The first component may include a cross-linker. The cross-linker may be employed for cross-linking the polymer and/or for forming a network structure. The cross-linker may be a compound that copolymerizes with the other monomers of the first component. For example, the cross-linker may include one or more (preferably two or more) alkene groups. Preferably, each alkene group is capable of polymerizing on a separate polymer molecules to form a link between the polymer molecules. As another example, the cross-linker may attach to a functional group (i.e., a functional group other than the alkene group) on each of two polymer molecules to connect the two polymer molecules. The cross-linker may be a multifunctional monomer, such as described herein.

### Multifunctional Monomer

The 1,1-disubstituted-1-alkene compound may include a multi-functional compound including two or more alkene groups. Examples of multi-functional compounds that may be employed herein include those described in U.S. Patent No. 9,249,265 B1, issued February 2, 2016 (see e.g., column 9, line 12 through column 9, line 46). Other examples of multi-functional compounds having a plurality of alkenyl groups includes those described in US Patent Application Publication US 2016/0068616 A1 (see e.g., paragraph 0042). For example, some or all of the 1,1-disubstituted alkenes can also be multifunctional having more than one core unit and thus more than one alkene group. Exemplary multifunctional 1,1-disubstituted alkenes are illustrated by the formula: 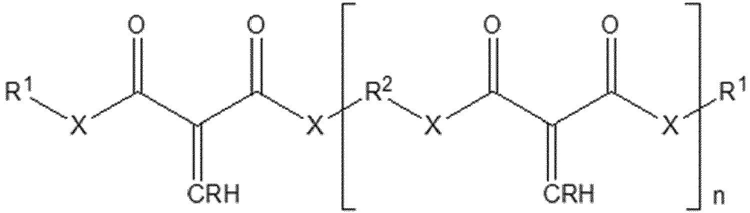 wherein R¹, R² and X are as previously defined; n is an integer of 1 or greater; and R is a hydrocarbyl group, and the 1,1-disubstituted alkene has n + 1 alkenes. Preferably n is 1 to about 7, and more preferably 1 to about 3, and even more preferably 1. In exemplary embodiments R² is, separately in each occurrence, straight or branched chain alkyl, straight or branched chain alkenyl, straight or branched chain alkynyl, cycloalkyl, alkyl substituted cycloalkyl, aryl, aralkyl, or alkaryl, wherein the hydrocarbyl groups may contain one or more heteroatoms in the backbone of the hydrocarbyl group and may be substituted with a substituent that does *not* negatively impact the ultimate function of the compounds or polymers prepared from the compounds. Exemplary substituents are those disclosed as useful with respect to R¹. In certain embodiments R² is, separately in each occurrence, C₁₋₁₅ straight or branched chain alkyl, C₂₋₁₅ straight or branched chain alkenyl, C₅₋₁₈ cycloalkyl, C₆₋₂₄ alkyl substituted cycloalkyl, C₄₋₁₈ aryl, C₄₋₂₀ aralkyl or C₄₋₂₀ aralkyl groups. In certain embodiments R² is separately in each occurrence C₁₋₈ straight or branched chain alkyl, C₅₋₁₂ cycloalkyl, C₆₋₁₂ alkyl substituted cycloalkyl, C₄₋₁₈ aryl, C₄₋₂₀ aralkyl or C₄₋₂₀ alkaryl groups.

If employed, the amount of the multi-functional compound preferably is sufficiently low so that the glass transition temperature of the polymer is not greatly affected by the network structure formed by the cross-links formed upon polymerization. For example, any increase in the glass transition temperature due to the multi-functional compound preferably is about 50 °C or less. Preferably the amount of the multi-functional compound is about 50 weight percent or less, more preferably about 30 weight percent or less, and most preferably about 12 weight percent or less, based on the total weight of the 1,1-disubstituted-1-alkene compounds (e.g., in the polymerizable composition or in the grafted polymer). The amount of the multi-functional compound preferably is sufficiently high so that a network or other cross-linked structure is obtained and/or for accelerating the polymerization reaction. A network structure may be particularly useful in avoiding the grafted polymer from being entirely absorbed in water. Acceleration in the polymerization reaction may be particularly useful for reducing setting time of an adhesive or coating including the grafted polymer. The amount of the multi-function compound preferably is present in an amount of about 0.2 weight percent or more, more preferably about 0.5 weight percent or more, even more preferably about 1.5 weight percent or more, and most preferably about 3.6 weight percent or more, based on the total weight of the 1,1-disubstituted-1-alkene compounds.

### Second Component

Some or all of the 1,1-disubstituted-1-alkene compound (e.g., the 1,1-diester-1-alkene compound) is grafted with a second component that imparts hydrophilic characteristics to the grafted compound. The second component (i.e., the hydrophilic component) may be a water-soluble polymer or a functional compound having ionic characteristics.

Hydrophilic component may include an oligomeric polymer (e.g., having a molecular weight from about 200 g/mole to about 8500 g/mole) or a high molecular weight polymer (having a molecular weight greater than 8500 g/mole). Such polymer include polyacrylamide homopolymers and copolymers, polyvinyl alcohol hompolymers and copolymers, polyacrylic acid homopolymers and copolymers, polyalkoxide homopolymers and copolymers (e.g., polyethylene oxide), amine containing polymers (e.g., polyamines, polyethyleneimines, and polymers including quaternary ammonium compounds), copolymers of vinyl methyl ether and maleic anhydride, and polyvinylpyrrolidone homopolymers and copolymers.

The second component may include or consist essentially of one or more quaternary ammonium compounds, such as a salt having a cation with the following structure: 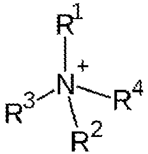 where the nitrogen is bonded to four carbon atoms. Preferably, the nitrogen atom is directly attached to one or more alkoxy groups. For example, the quaternary ammonium compound may have the structure: 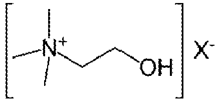 where X⁻ is a counter anion. Preferably, R¹, R², R³, and R⁴ are each alkyl or alkoxy groups, and most preferably C₁, C₂, C₃, or C₄ alkyl or C₁, C₂, C₃, or C₄ alkoxy groups. The number of alkoxy groups on the quaternary ammonium compound may be one, two or more, and is most preferably one.

The counter anion for the quaternary ammonium compound may be any anion. Examples of anions include halogen anions (fluoride ion, chloride ion, bromide ion, or iodide ion), hydroxide ion, acetate ion, chlorate ion, sulfate ion, nitrate ion, perchlorate ion, and sulfite ion, nitrite ion, sulfate anions, sulfite anions, and carbonate ions. Particularly preferred anions include sulfite ions, nitrate ions, and carbonate ions.

### Grafting or Transesterification Reaction

The second component may be grafted onto the 1,1-disubstituted-1-alkene compound (e.g., the 1,1-diester-1-alkene compound) using any method capable of connecting the compounds. Preferably the 1,1-disubstituted-1-alkene compound is directly connected to the second component by a covalent bond. A preferred reaction for grafting the second component is a transesterification reaction. The transesterification reaction may employ one or more catalysts. It will be appreciated that the grafting reaction may occur before or after the polymerization of the 1,1-disubstituted-1-alkene compound. Preferably the grafting reaction is performed prior to the polymerization reaction.

An illustrative grafting reaction is shown below, where a 1,1-disubstituted-1-alkene compound (e.g., DEMM) is reacted with a quaternary ammonium salt by a transesterification reaction using a catalyst (e.g., an acid catalyst or an enzymatic catalyst).

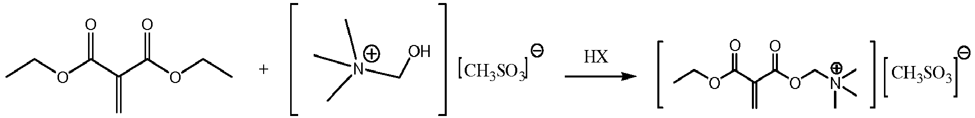

Another illustrative grafting reaction is shown below, where a 1,1-disubstituted-1-alkene compound (e.g., DEMM) is reacted with a water-soluble polymer (e.g., polyethylene glycvol) by a transesterification reaction.

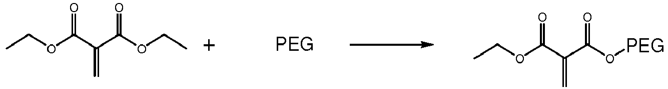

### Catalyst

The transesterification reactions according to the teachings herein are typically performed in the presence of one or more catalysts. The transesterification catalyst may be an acid, an ester of such acid or an enzyme. The transesterification catalyst may be an enzyme. The transesterification catalyst may be a lipase enzyme. A transesterification process utilizing an enzyme is disclosed in US 2014/0329980.

The transesterification catalyst may be one or more acids having a pKa in a polar aprotic solvent of about -5 to about 14 or esters of the acids. The acid or the ester of the acid may be present in an amount of about 3.0 molar equivalents or less of the acid or the ester of acid per molar equivalent of the ester containing compounds transesterified. When the catalyst is an acid or an ester of an acid the method may be performed at a temperature of about 20 ºC to about 160 ºC. The transesterification catalyst may be a lipase enzyme catalyst. When the catalyst is a lipase enzyme catalyst the transesterification step is performed at an elevated temperature between about 20 °C and 70 °C. During the transesterification reaction, volatile by-products may be formed and removed from the reaction mixture. The volatile by-products may be removed from the reaction mixture by applying a vacuum. The volatile by-products may be alcohols.

The catalyst may be an acid or an ester thereof. The transesterification process using an acid or ester is disclosed in US Patent Application serial number 14/814,961 filed 07/31/2015. Any acid or ester thereof that catalyzes transesterification while minimizing side reactions may be used. In some embodiments the acid or acid utilized to form an ester is an acid having a pKa in a polar aprotic solvent, such as acetonitrile or dioxane, as disclosed hereinafter. In particular the pKa is chosen to efficiently catalyze the transesterification reaction while minimizing side reaction and the concentration of catalyst in a reaction mixture. The acid used may have a pKa of about -5 or greater, about -3 or greater, or about 1.0 or greater. The acid used may have a pKa of about 14 or less, about 11 or less, or about 9 or less. The acid can be a Bronsted acid having a pKa as disclosed. The catalyst may be a superacid or an ester thereof. Superacid means an acid having an acidic strength greater than the strength of 100 percent sulfuric acid. Ester thereof, in the context of the acid catalysts, refer to compounds wherein the hydrogen on the acid is replaced with a hydrocarbyl group, preferably an alkyl group. Superacids are acids having a strength greater than the strength of 100 percent sulfuric acid, a pKa less than 100 percent sulfuric acid, that is less than 8, more preferably less than about 5, and most preferably less than about 2. The measurement of acid strength is based on Kutt et al. "Equilibrium Acidities of Super Acids," Journal of Organic Chemistry Vol 76 pages 391 to 395, 2011, published on the Web December 17, 2010. Exemplary super acids include trifluoromethanesulfonic acid (triflic acid), sulfated tin oxide, triflated tin oxide, sulfated zirconia, triflated zirconia, and triflated HZSM-5. The most preferred super acids are triflic acid and fluorosulfonic acid.

Exemplary acid catalysts include triflic acid, fluorosulfonic acid, and sulfuric acid. For reactions requiring monosubstitution (only one hydroxyl group on the alcohol is being replaced by transesterification), weaker acids with pKa values equal to or higher than sulfuric acid may be desired. Examples of such acids include sulfuric acid or methanesulfonic acid. For reactions requiring disubstitution (two hydroxyl groups on the alcohol are being replaced by transesterification), stronger acids with pKa values equal to or lower than sulfuric acid may be desired. Examples of such acids include sulfuric acid, fluorosulfonic acid, and triflic acid. For reactions requiring polysubstitution (more than 2 hydroxyl groups on the alcohol), choice of acid catalysts can be similar to that for disubstitution reactions but reaction time may need to be increased. Esters of acids useful as catalysts include alkyl triflates.

The catalyst can be mixed with the reactants or can be supported on a substrate such as a membrane or an inert carrier such as a porous support structure (the catalysts can be heterogeneous). Catalysts which are not supported are commonly referred to as homogeneous. The catalyst can be used in any concentration that catalyzes the transesterification reaction. The amount of catalyst utilized for the reaction depends on the type of catalyst being chosen. The concentration of catalyst is about 3 molar equivalents or less per equivalent of the ester compounds undergoing transesterification; about 1 molar equivalents or less; about 0.5 molar equivalents or less; about 0.1 molar equivalents or less. The concentration of catalyst is about 0.01 molar equivalents or greater per equivalent of the ester compounds undergoing transesterification; and most preferably about 0.1 molar equivalents or greater. Higher concentrations of catalysts than recited may be utilized. As disclosed in Malofsky et al., US 8,609,885 and 8,884,051; and Malofsky et al. WO 2013/059473 the presence of acid in the 1,1-disubstituted alkene compounds recovered can present problems with respect to use of the compounds and low concentrations of acid in the products in use is desired. If high levels of acid are contained in the final product, additional purification or removal steps may be required. The amounts recited achieve the balance between efficient catalysis and the need for low acid concentrations in the product for use. In embodiments when the catalyst is selected from sulfuric acid or those acids having pKa values less than that of sulfuric acid, the concentration of such catalysts in the reaction mixture is preferably at the upper end of the ranges recited herein.

The catalyst may include or consist entirely of an enzymatic catalyst. Any enzymatic catalyst suitable for catalyzing the transesterification reaction may be used. Various enzymatic catalysts are described in US Patent 7,972,822 B2 (by Gross et al., issued on July 5, 2011, see for example column 8, lines 2-4 and 7-35), US Patent 5,416,927 A (by Zaks et al., issued May 31, 1994, see for example column 2, line 64 to column 3, line 12), US Patent 5,288,619 A (by Brown et al., issued February 22, 1994, see for example column 4, line 18 to column 5, line 17), US Patent Application Publication 2016/177,349 A1 (by Addy et al., published June 23, 2016, see for example paragraphs 0046 - 0048), U.S. Patent Application Publication 2014/0017741 A1 (by Nielsen et al., published Jan. 16, 2014, see for example paragraphs 0026-0029).

Many different enzymes may be employed in enzymatic catalytic transesterification reactions for wax esters, including those that are derived/obtained from biological organisms, those made synthetically, and those that are entirely artificial, whether made biologically and/or synthetically. For those enzymes that are lipases, these may include, one, some, any, or any combination of lipases derived from the following organisms: *Aspergillus niger, Aspergillus oryzae, Bacillus subtilis, Bacillus thermocatenulatus, Burkholderia cepacia, Burkholderia glumae, Candida rugosa, Candida antarctica A, Candida antarctica B, Candida cylindracea, Candida parapsilosis, Chromobacterium viscosum, Geotrichum candidum, Geotrichum* sp., *Mucor miehei, Humicola lanuginose, Penicillium camembertii, Penicillium chrysogenum, Penicillium roquefortii, Pseudomonas cepacia, Pseudomonas aeruginosa, Pseudomonas fluorenscens, Pseudomonas tragi, Pseudomonas alcaligenes, Pseudomonas mendocina, Rhizopus arrhizus, Rhizomucor miehe, Staphylococcus hyicus, Staphylococcus aereus, Staphylococcus epidermidis, Staphylococcus warneria, Staphylococcus xylosus, Thermomyces lanuginosus, Aspergillus* sp., *Bacillus* sp., *Burkholderia* sp., *Candida* sp., *Chromobacterium* sp., *Geotrichum* sp, *Mucor* sp, *Humicola* sp, *Penicillium* sp, *Pseudomonas* sp, *Rhizopus* sp., *Staphylococcus* sp, and *Thermomyces* sp. The lipase may include or consist essentially of one or any combination of the following: a lipase from *Thermomyces lanuginosus* marketed under the tradenames LIPOZYME TL IM or LIPEX by Novozymes A/S of Bagsvaerd, Denmark and immobilized on a substrate also manufactured by Novozymes; the lipase may be that marketed under the tradename NOVOZYM by Novozymes, A/S derived from *Candida antarctica;* those marketed under the tradenames CALB L, NOVOZYME 435, NOVOCOR AD L, AND LIPOLASE 100L by Novozymes; those marketed under the tradenames CALB, CALA, and CRL by c-LEcta, GMBH of Leipzig, Germany; those marketed under the tradenames LIPASE A "AMANO" 12, LIPASE AY "AMANO" 30SD, LIPASE G "AMANO" 50, LIPASE R "AMANO", LIPASE DF "AMANO" 15, LIPASE MER "AMANO", and NEWLASE F by Amano Enzyme Inc. of Nagoya, Japan; those marketed under the tradenames LIPASE MY, LIPASE OF, LIPASE PL, LIPASE PLC/PLG, LIPASE QLM, LIPASE QLC/QLG, LIPASE SL, and LIPASE TL by Meito Sangyo Co., Ltd., of Nagoya, Japan, a lipase from *Candida antarctica* A, a lipase from *Candida antarctica* B, and a lipase from *Candida rugosa.* In various implementations, the lipases preferably have at least 60%, at least 70%, at least 80%, at least 90%, at least 95%, at least 96%, at least 97%, at least 98%, or even at least 99% identity to any of the lipases disclosed herein, and in the patent applications disclosed herein.

### Polymerization of the grafted 1,1-disubstituted-1-alkene

The grafted 1,1-disubstituted-1-alkene compound may be polymerized by reacting the alkene group onto a growing polymer chain. Preferably about 70% or more, even more preferably about 90 % or more, and most preferably about 98% or more of the alkene groups are polymerized. Preferably, the polymer includes a sufficient amount of the hydrophilic component (e.g. the water-soluble polymer and/or the cation containing compound) so that the resulting grafted polymer is hydrophilic or water-soluble. The polymerization reaction may be catalyzed (e.g., using tetramethylguanidine).

The polymerization of a grafted 1,1-disubstituted alkene including a water-soluble polymer is illustrated below.

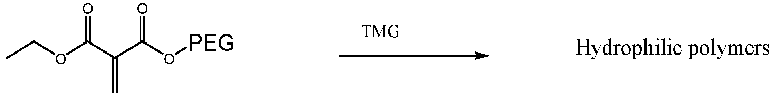

The polymerization of a grafted 1,1-disubstituted alkene including a cation containing compound is illustrated below.

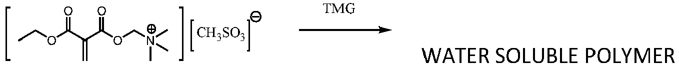

The polymerization reaction may occur at one or more reaction temperatures sufficiently high for converting the monomer into polymer. As the polymerization reaction progresses, the polymerizable composition may become a viscous liquid, a glassy liquid (e.g., below the glass transition temperature of the polymer) or even a solid (e.g., below the melting temperature of the polymer). Preferably, the reaction temperature is above the glass transition temperature of the resulting polymer (e.g., of the first component). Preferably, the reaction temperature is above any melting temperature of the resulting polymer. As an alternative, the process may include an initial polymerization at a relatively low temperature (e.g., below any melting temperature and/or below the glass transition temperature of the polymer) and then the process may include a secondary polymerization reaction at a higher temperature (e.g., above the melting temperature and/or above the glass transition temperature of the polymer). The reaction temperature and reaction time may be selected to provide a desired level of polymerization and/or a desired level of cross-linking.

### Polymerizable system (i.e., polymerizable composition)

One aspect according to the teachings herein, is directed at a polymerizable system including the grafted 1,1-disubstituted alkene compound (e.g., grafted with the quaternary ammonium compound or with a water-soluble polymer) and preferably further including one or more 1,1-disubstituted alkene compounds (e.g., a methylene malonate monomer) that is free of any such graft .The methylene malonate monomer may be selected so that it will copolymerize with the alkenyl groups of the grafted compound. It will be appreciated that the grafted compound may include a 1,1-disubstituted-1-alkene compound that is the same or different from the methylene malonate monomer.

Any of the methylene malonate compounds described herein with respect to the graft compound having an alkenyl group for the may be employed as an additional monomer in the polymerizable composition. It will be appreciated that methylene malonate monomer may be replaced in part or in whole with dimers, trimers, or longer oligomers (e.g., having a degree of polymerization of about 4 to 50, about 4 to 15, or about 4 to 8).

The polymerizable system may include a sufficient amount of a stabilizer to prevent or minimize polymerization of the polymerizable system. The process may include a step of activating the polymerizable system for polymerizing the methylene malonate monomers and alkenyl group(s) attached to the grafted compound.

It will be appreciated that the polymerizable system may be used to form a grafted polymer that is a block copolymer including a first block including one or more 1,1-disubstituted alkene compounds and a second block including the water-soluble polymer. The amount of the first polymer block preferably is about 10 weight percent or more, more preferably about 20 weight percent or more, even more preferably about 25 weight percent or more, and most preferably about 30 weight percent or more, based on the total weight of the block copolymer. The amount of the first block may be about 90 weight percent or less, about 80 weight percent or less, about 70 weight percent or less, about 60 weight percent or less, or about 50 weight percent or less, based on the total weight of the block copolymer.

The amount of the water-soluble polymer in the block copolymer preferably is about 10 weight percent or more, more preferably about 20 weight percent or more, even more preferably about 30 weight percent or more, even more preferably about 40 weight percent or more, and and most preferably about 50 weight percent or more, based on the total weight of the block copolymer. The amount of the water-soluble polymer may be about 90 weight percent or less, about 80 weight percent or less, about 75 weight percent or less, or about 70 weight percent or less, based on the total weight of the block copolymer. The ratio of the weight of the first component to the weight of the water-soluble polymer in the block copolymer may be about 0.05 or more, about 0.10 or more about 0.20 or more or about 0.45 or more, or about 0.60 or more. The ratio of the weight of the first component to the weight of the water-soluble polymer may be about 10 or less, about 8 or less, about 6 or less, about 4 or less, about 3 or less, or about 2 or less.

The grafted 1,1-disubstituted alkene compounds and/or polymerizable system may be used for a film or coating. The film or coatings may have a thickness of about 0.001 µm or more, about 0.1 µm or more, about 1 µm or more, or about 2 µm or more. The coating or film preferably has a thickness of about 200 µm or less, more preferably about 50 µm or less, and most preferably about 20 µm or less.

The grafted polymer may be used in a polymeric composition including about 10 weight percent or more of the grafted polymer and about 0.5 to about 90 weight percent of one or more compounds selected from the group consisting of a filler, a stabilizer, a process aid, a biocide, a polymer, a colorant, a salt, and any combination thereof. For example, the polymeric composition may include a sufficient amount of a salt so the polymeric composition is an electrical conductor.

The second component may impart useful characteristics to the 1,1-disubstituted alkene compound (or the resulting grafted polymer) for use in oil field applications. For example, the grafted compound may be used as an oil-wetting agent, a bactericide, or a corrosion inhibitor.

The compositions, compounds and grafted polymers according to the teachings herein may be employed in various applications that take advantage of feature of one or both of the components of the grafted polymer. In particular, these materials may be employed in electronics (conducting polymers), as a surfactant, an ionomer, in a pharmaceutical process, in petroleum recovery in water treatment, as a flocculant, in a hydrometallurgy process, or as a detergent. Other applications include as a hydrophilic coating. For example, such a coating may be useful for anti-fouling applications. Without being bound by theory, it is believed that the high amount of hydration may provide a surface difficult for proteins and microorganisms to attach to. As such, the materials according to the teachings herein may prevent or reduce the accumulation of bio-organisms on a surface. These may be used for protecting against fouling by plants, algae, microorganisms, or animals. The material and compositions according to the teachings herein may be particularly used on surfaces that are at least partially submerged in a body of water containing organisms capable of fouling or otherwise attaching to the surface. They may be used for preventing fouling by calcerous fouling organisms include mussels (e.g., zebra mussels), mollusks, barnacles, and other organisms that form a hard calcium carbonate containing structure. They may be used for preventing fouling by non-calcerous organisms include algae, biofilm, seaweed and other organisms that lack a calcium carbonate containing structure. The materials and compositions according to the teachings herein may be used for removing water from surfaces and/or for keeping surfaces dry. The materials and compositions according to the teachings herein may be used for converting liquid waste to a stable solid or other structure where the liquid is absorbed by the grafted polymer. This may be particularly useful where the liquid includes chemically hazardous compounds, biologically hazardous materials, toxic materials, or environmentally hazardous substances.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the invention should, therefore, be determined not with reference to the above description, but should instead be determined with reference to the appended claims, along with the full scope of equivalents to which such claims are entitled. The omission in the following claims of any aspect of subject matter that is disclosed herein is not a disclaimer of such subject matter, nor should it be regarded that the inventors did not consider such subject matter to be part of the disclosed inventive subject matter.

### EXAMPLES

### Example 1

Example 1 is a reaction mixture including a methylene malonate monomer grafted with a polyalkylene glycol and unreacted methylene malonate monomer. The grafting reaction is carried out using PEGylation process.

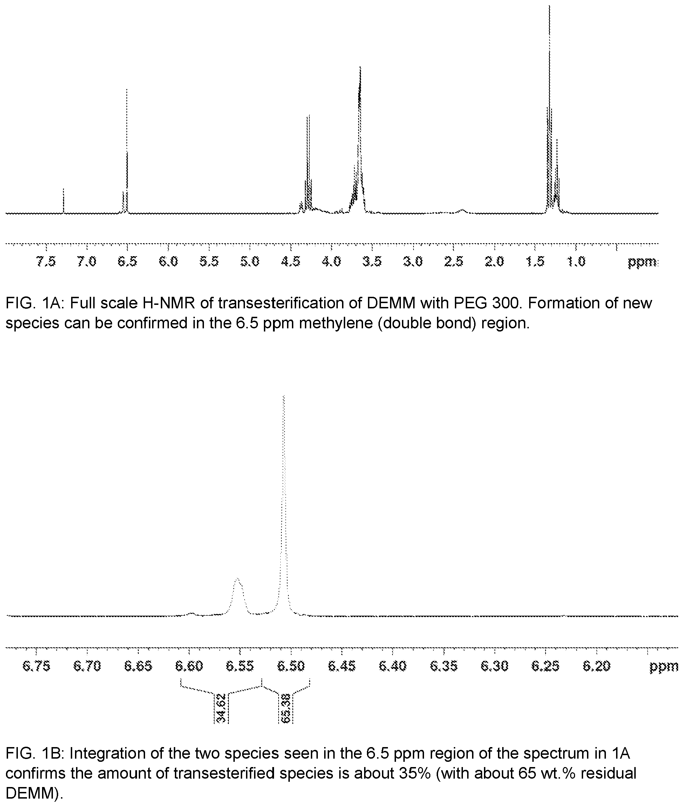

CARBOWAX™ PEG 300 polyethylene glycol (commercially available from DOW CHEMICAL COMPANY) is purified by passing through an alumina column to residual base catalyst. The polyethylene glycol has a number average molecular weight of about 285 to 300 g/ mole, a hydroxyl number of about 340 to 394 mg KOH/g, a melting range of about -15°C to about -8 °C, and a heat of fusion of about 37 cal/g. A 250 mL round bottom flask is charged with about 30 g (0.17 mol) of DEMM, about 3 g (10wt % of the DEMM) of CLEA 102B4enzyme and about 16.6 g (0.083 mol) of the PEG 300 (alumina passed). The flask is connected to a rotary evaporator with a vacuum of about 200 mm Hg and heated to about 45 °C for 2 hrs. The vacuum removes ethanol as a reaction by-product. The enzyme is then filtered from the reaction mixture using a cotton plug in 20 ml syringe. NMR results indicate that about 35 percent of the DEMM is reacted to the PEG and about 65 percent of the DEMM remains as unreacted monomer in the reaction mixture. FIG. 1 shows the NMR for the reaction mixture.

The grafted DEMM may have a structure including a central polymer portion including a polyalkoxide and terminal methylene malonate groups having one or more (or all) of the features illustrated below:

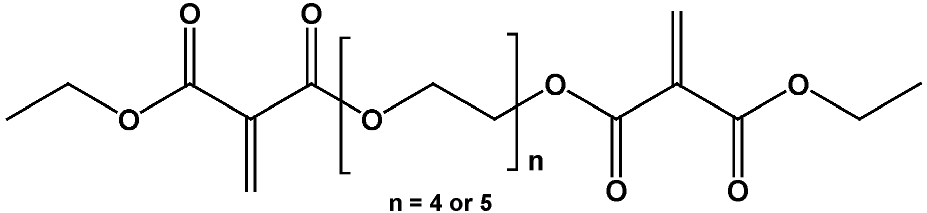

The reaction mixture of the grafted DEMM is drawn down on a pre-initiated (0.1% Na-benzoate in butyl cellosolve) cold rolled steel panel using a Meyer Rod 10 resulting in a 25-micron thick coating after full cure at room temperature for 24 hours followed by heating at 82°C for 1 hour. The coating displays hydrophilic character with water wetting the surface with ease and eventually permeating through the coating layer on continued exposure. A similar coating drawn down with only DEMM monomer demonstrates no hydrophilic character. This demonstrates the hydrophilicity imparted by polyethylene glycol in DEMM based coatings.

### Example 2

Example 2 is a reaction mixture including a polyalkylene glycol grafted onto a methylene malonate monomer and unreacted methylene malonate monomer. The grafting of the polyalkylene glycol is carried out using an acid catalyzed transesterification process.

A three neck (250 mL) round bottom flask with a distillation head, thermometer, vacuum adapter, and a collection flask are assembled using high vacuum grade grease along with a heating mantle (and thermocouple) and a magnetic stir bar. To this round bottom flask set-up, a mixture of about 20 g (about 0.12 mol) of DEMM, about 4.6 g (about 0.023 mol) of CARBOWAX™ PEG 200 polyethylene glycol (commercially available from DOW CHEMICAL COMPANY), about 0.02 g (about 1000 ppm) of MeHQ and about 0.3 ml (about 0.0058 mol) of H₂SO₄ is charged. CARBOWAX™ PEG 200 polyethylene glycol has a weight average molecular weight of about 190 to 210 g/mole, an average hydroxyl number of about 535 to about 590 mg KOH/g, and a melting point below about -65 °C. A reduced pressure of about 400 mm Hg is maintained during the reaction using a vacuum pump. The reaction mixture is then heated to about 130 °C and stirred for about 2 hours. Ethanol is collected as a reaction byproduct. The amount of grafting of the PEG onto the DEMM is calculated using NMR. About 45 percent of the DEMM is reacted with the PEG and about 55 percent of the DEMM remains as monomer.

The grafted compound may have a structure including a central polymer portion including a polyalkoxide and terminal methylene malonate groups having one or more (or all) of the features illustrated below:

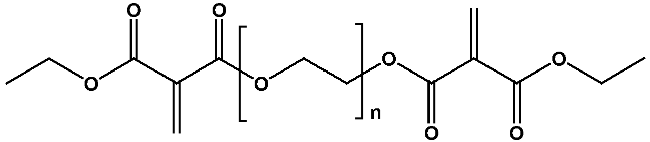

### Example 3

Example 3 is a reaction mixture including a glycerol ethoxylate grafted onto a methylene malonate monomer and unreacted methylene malonate monomer. The grafting of the glycerol ethoxylate may be carried out using a transesterification process.

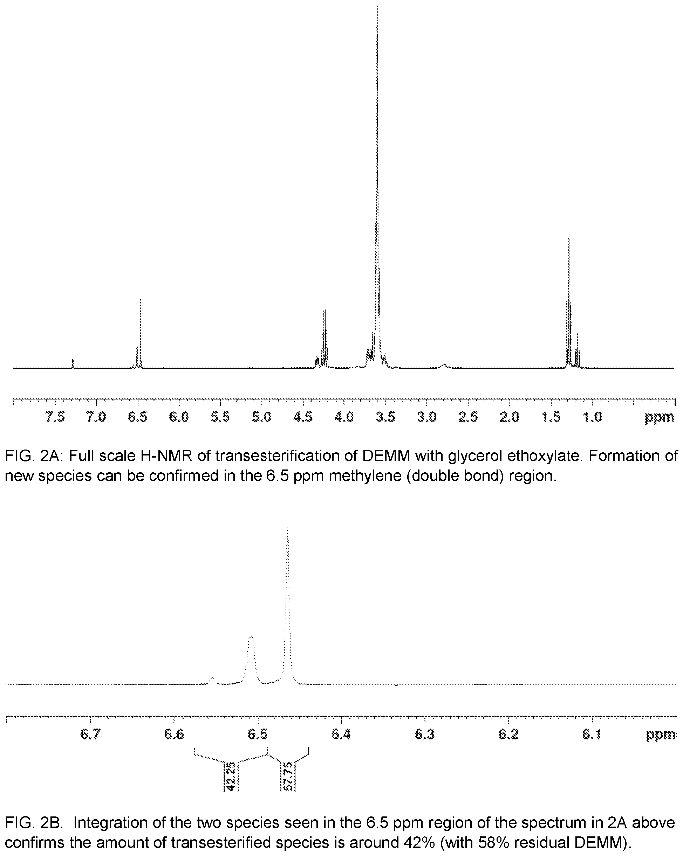

A 250 mL round bottom flask is charged with about 30 g (about 0.17 mol) of DEMM, about 3 g (about10 parts per 100 parts of DEMM) of enzyme NOVOZYME 435 *candida antartica* isoform B (commercially available from NOVOZYME) and about 56 g (about 0.056 mol) of glycerol ethoxylate (having a number average molecular weight of about 1000, obtained from Sigma Aldrich). The flask is connected to a rotary evaporator with reduced pressure of about 200 mm Hg and is heated to about 55 °C for about 8 hours. Ethanol is removed as a reaction byproduct. The enzyme is then filtered from the product using cotton plug in a 20 ml syringe, for isolating the reaction mixture. NMR results are obtained of the reaction mixture and used to calculate the conversion of the glycerol ethoxylate to the end-capped product. About 40% of desired transesterified products (i.e., end-capped product) is observed. The NMR spectrum for the reaction mixture is shown in FIG. 2. It is believed that the reaction mixture includes disubstituted and trisubstituted glycerol ethoxylate reaction products. The resulting reaction mixture includes the grafted compound having one or more of the features as shown in the structures below.

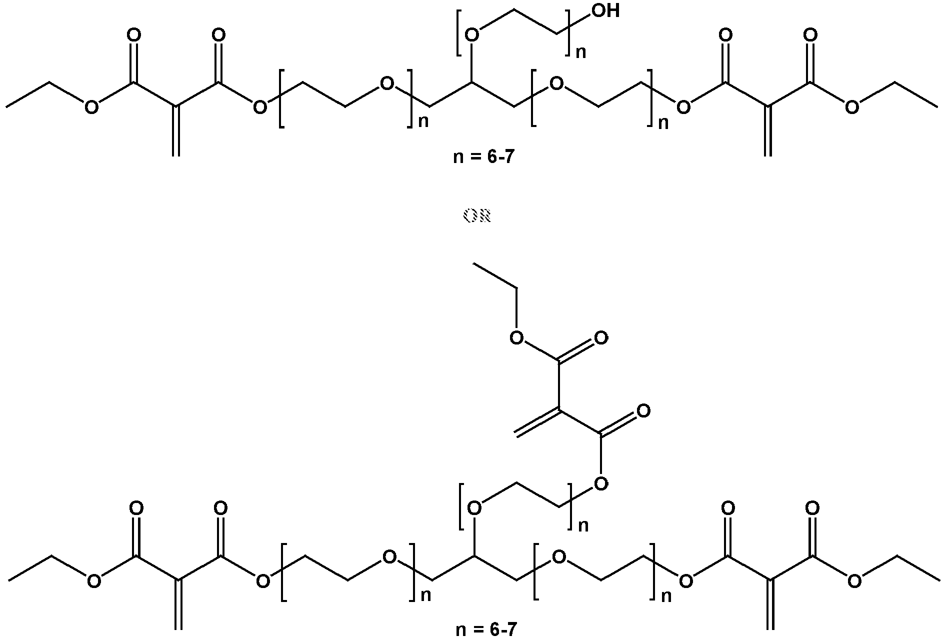

The reaction mixture is drawn down on a pre-initiated (0.1% Na-benzoate in butyl cellosolve) cold rolled steel panel using a Meyer Rod 10 resulting in a about 25-micron thick coating after full cure at room temperature for about 24 hours followed by heating at about 82°C for about 1 hour. The coating displays hydrophilic character with water wetting the surface with ease and eventually permeating through the coating layer on continued exposure. In comparison, a specimen prepared with the reaction mixture replaced with only DEMM and cured under the same conditions (e.g., resulting in a DEMM homopolymer) demonstrates no hydrophilic character. Thus, the DEMM grafted with glycerol ethoxylate may be used to impart hydrophilicity in a coating (e.g., in a methylene malonate coating, such as a DEMM based coatings).

### Characterization of the Graft Polymer

The graft polymer may be evaluated for water solubility / hydrophilicity characteristics.

A primer solution of either about 0.1 wt % sodium benzoate or about 0.5 wt % tetramethylguanidine (i.e, TMG) in ethanol is drawn down onto a steel panel using a meyer rod. The solvent is allowed to flash off at room temperature. Then, 2ml of a polymerizable composition (e.g., including the second component directly attached to a methylene malonate compound) is applied to the top of the panel and drawn down in a similar manner using a meyer rod. The coating is left to cure at room temperature overnight for about 18 hours.

The cured coating is tested by applying a single drop of reverse osmosis (i.e., RO) water to the surface and measuring the amount of time for the coating to be dissolved or the drop to be absorbed. The coating displays hydrophilic character with water wetting the surface of the coating with ease and eventually permeating through the coating layer and preferably removing the coating on continued exposure.

Several graft polymers are prepared by mixing a dimethyl methylene malonate monomer, diethyl methylene malonate functionalized with glycerol ethoxylate, and a cross-linker as shown in the table below and coatings were tested in the following manner. The polymerization is on the steel substrate treated with the primer solution as described above.

| Composition | FM1 | FM2 | FM3 | FM4 | FM5 |
|---|---|---|---|---|---|
| DEMM functionalized glycerol ethoxylate, weight % | 80 | 70 | 60 | 50 | 30 |
| Cross-linker, weight percent | 10 | 20 | 10 | 20 | 35 |
| D3M, weight percent | 10 | 10 | 30 | 30 | 35 |

After polymerizing the first component, the first component includes a random copolymer of the D3M, DEMM, and the cross-linker, where the cross-linker is a multi-functional 1,1-disubstituted-1-alkene compound having a plurality of polymerizable alkene groups. The second component (i.e, the hydrophilic component) consists essentially of the glycerol ethoxylate.

After curing overnight at room temperature, the time for the drop of water to solubilize the coating is measured. As the amount of cross-linker is increased, the time for solubilizing the coating is increased.

Samples are also prepared, as described above, except the coating is exposed to a secondary cure by heating for about 30 minutes at a temperature of about 80 °C. After the secondary cure, the time for solubilizing the coating is increased.

## Claims

1. A grafted polymer comprising:
i. a first component including a polymer formed by polymerizing one or more monomers including a 1,1-disubstituted-1-alkene compound, attached to
ii. a second component that is a hydrophilic component,
wherein the hydrophilic component includes a cation or a water-soluble polymer.

2. The grafted polymer of claim 1, wherein the hydrophilic component is a water-soluble polymer selected from the group consisting of a polyacrylamide, a polyvinyl alcohol, a polyacrylic acid, a polyalkoxide, a water soluble amine containing polymer a polyethyleneimine, or a polymer including quaternary ammonium compounds, a copolymer of vinyl methyl ether and maleic anhydride, polyvinylpyrrolidone, a copolymer thereof, or any combination thereof.

3. The grafted polymer of claim 1 or 2, wherein the grafted polymer is **characterized by** one or any combination of the following:
i) 20 atomic percent or more of the monomers of the first component are directly attached to the second component; or
ii) the first component is present in an amount of 10 weight percent or more, based on the total weight of the graft polymer; or
iii) the second component is present in an amount of 20 weight percent or more, based on the total weight of the graft polymer; or
iv) the total amount of the first component and the second component is 50 weight percent or more, based on the total weight of the graft polymer.

4. The grafted polymer of any of claims 1 through 3, wherein the 1,1-disubstituted-1-alkene compound includes one or more 1,1-diester-1-alkenes, having a structure: 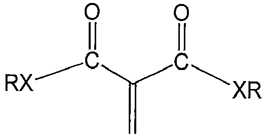 wherein R is a hydrocarbyl group which may contain one or more heteroatoms and X is oxygen or a direct bond.

5. The grafted polymer of any of claims 1 through 4, wherein the 1,1-disubstituted-1-alkene compound is a methylene malonate having a structure: 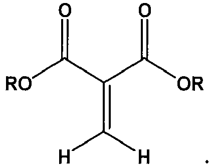 wherein R is separately in each occurrence alkyl, alkenyl, C₃-C₉ cycloalkyl, heterocyclyl, alkyl heterocyclyl, aryl, aralkyl, alkaryl, heteroaryl, or alkheteroaryl, or polyoxyalkylene, or both of the R's form a 5-7 membered cyclic or heterocyclic ring .

6. A polymeric composition comprising:
i) 10 weight percent or more of the grafted polymer of any of claims 1 through 5, based on the total weight of the polymeric composition; and
ii) 0.5 to about 90 weight percent of one or more compounds selected from the group consisting of a filler, a stabilizer, a process aid, a biocide, a polymer, a colorant, a salt, and any combination thereof.

7. A polymerizable composition including a 1,1-disubstituted-1-alkene compound grafted to a water-soluble polymer for polymerizing the grafted polymer of any of claims 1 through 5, wherein the polymerizable composition includes 20 weight percent or more of grafted 1,1-disubstituted-1-alkene compounds.

8. The polymerizable composition of claim 7, wherein the polymerizable composition includes a cross-linker for cross-linking the 1,1-disubstituted-1-alkene compounds.

9. A method of forming a grafted compound comprising a step of grafting a 1,1-diester-1-alkene compound with a quaternary ammonium compound or with a water-soluble polymer,
wherein the grafting step is catalyzed by an acid catalyst or an enzymatic catalyst.

10. The method of claim 9, wherein the grafting step includes a transesterification reaction.

11. The method of any of claims 9 through 10, wherein the method includes a step of polymerizing the 1,1-diester-1-alkene compounds.

12. A method of forming a grafted polymer including a step of polymerizing the polymerizable composition of claim 7 or 8, wherein the step of polymerizing is catalyzed by tetramethylguanidine.

13. A conductive polymeric composition comprising:
the grafted polymer of any of claims 1 through 5 doped with one or more salts at a concentration of 20 weight percent or more, based on the total weight of the composition.

14. A coating comprising the grafted polymer of any of claims 1 through 5, wherein the grafted polymer is cross-linked or has a network structure.

15. The use of the grafted polymer of any of claims 1 through 5 as a surfactant, an ionomer, an antifouling agent, for petroleum recovery, for water treatment, as a flocculant, for hydrometallurgy, as a detergent, in a pharmaceutical process or any combination thereof

## Patentansprüche

1. Pfropfpolymer, umfassend:
i. eine erste Komponente, die ein Polymer enthält, das durch Polymerisation eines oder mehrerer Monomere enthaltend eine 1,1-disubstituierte 1-Alkenverbindung ausgebildet wird, gebunden an
ii. eine zweite Komponente, die eine hydrophile Komponente ist,
wobei die hydrophile Komponente ein Kation oder ein wasserlösliches Polymer enthält.

2. Pfropfpolymer nach Anspruch 1, wobei die hydrophile Komponente ein wasserlösliches Polymer ist, ausgewählt aus der Gruppe bestehend aus einem Polyacrylamid, einem Polyvinylalkohol, einer Polyacrylsäure, einem Polyalkoxid, einem wasserlöslichen aminhaltigen Polymer, einem Polyethylenimin oder einem Polymer einschließlich quaternärer Ammoniumverbindungen, einem Copolymer aus Vinylmethylether und Maleinsäureanhydrid, Polyvinylpyrrolidon, einem Copolymer davon oder einer beliebigen Kombination davon.

3. Pfropfpolymer nach Anspruch 1 oder 2, wobei das Pfropfpolymer durch eine oder eine beliebige Kombination der folgenden Eigenschaften gekennzeichnet ist:
i) 20 Atomprozent oder mehr der Monomere der ersten Komponente sind direkt an die zweite Komponente gebunden; oder
ii) die erste Komponente ist in einer Menge von 10 Gewichtsprozent oder mehr, bezogen auf das Gesamtgewicht des Pfropfpolymers, vorhanden; oder
iii) die zweite Komponente ist in einer Menge von 20 Gewichtsprozent oder mehr, bezogen auf das Gesamtgewicht des Pfropfpolymers, vorhanden; oder
iv) die Gesamtmenge der ersten Komponente und der zweiten Komponente beträgt 50 Gewichtsprozent oder mehr, bezogen auf das Gesamtgewicht des Pfropfpolymers.

4. Pfropfpolymer nach einem der Ansprüche 1 bis 3, wobei die 1,1-disubstituierte 1-Alkenverbindung einen oder mehrere 1,1-Diester-1-alkene enthält mit einer Struktur: 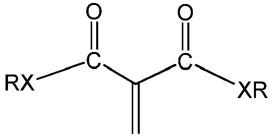 worin R eine Kohlenwasserstoffgruppe ist, die ein oder mehrere Heteroatome enthalten kann, und X Sauerstoff oder eine direkte Bindung ist.

5. Pfropfpolymer nach einem der Ansprüche 1 bis 4, wobei die 1,1-disubstituierte 1-Alkenverbindung ein Methylenmalonat ist mit einer Struktur: 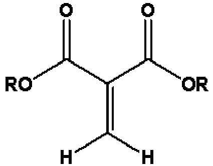 worin R bei jedem Auftreten getrennt Alkyl, Alkenyl, C₃-C₉-Cycloalkyl, Heterocyclyl, Alkylheterocyclyl, Aryl, Aralkyl, Alkaryl, Heteroaryl oder Alkheteroaryl oder Polyoxyalkylen ist, oder beide R einen 5-7-gliedrigen cyclischen oder heterocyclischen Ring bilden.

6. Polymerzusammensetzung, umfassend:
i) 10 Gew.-% oder mehr des Pfropfpolymers nach einem der Ansprüche 1 bis 5, bezogen auf das Gesamtgewicht der Polymerzusammensetzung; und
ii) 0,5 bis etwa 90 Gew.-% einer oder mehrerer Verbindungen, ausgewählt aus der Gruppe bestehend aus einem Füllstoff, einem Stabilisator, einem Verarbeitungshilfsmittel, einem Biozid, einem Polymer, einem Färbemittel, einem Salz und einer beliebigen Kombination davon.

7. Polymerisierbare Zusammensetzung, die eine 1,1-disubstituierte 1-Alkenverbindung enthält, die auf ein wasserlösliches Polymer aufgepfropft ist zum Polymerisieren des Pfropfpolymers nach einem der Ansprüche 1 bis 5, wobei die polymerisierbare Zusammensetzung 20 Gew.-% oder mehr gepfropfte 1,1-disubstituierte 1-Alkenverbindungen enthält.

8. Polymerisierbare Zusammensetzung nach Anspruch 7, wobei die polymerisierbare Zusammensetzung einen Vernetzer zum Vernetzen der 1,1-disubstituierten 1-AlkenVerbindungen enthält.

9. Verfahren zur Bildung einer gepfropften Verbindung, umfassend einen Schritt des Pfropfens einer 1,1-Diester-1-alken-Verbindung mit einer quaternären Ammoniumverbindung oder mit einem wasserlöslichen Polymer, wobei der Pfropfschritt durch einen Säurekatalysator oder einen enzymatischen Katalysator katalysiert wird.

10. Verfahren nach Anspruch 9, wobei der Pfropfschritt eine Umesterungsreaktion einschließt.

11. Verfahren nach einem der Ansprüche 9 bis 10, wobei das Verfahren einen Schritt der Polymerisation der 1,1-Diester-1-alken-Verbindungen einschließt.

12. Verfahren zur Bildung eines Pfropfpolymers, umfassend einen Schritt des Polymerisierens der polymerisierbaren Zusammensetzung nach Anspruch 7 oder 8, wobei der Schritt des Polymerisierens durch Tetramethylguanidin katalysiert wird.

13. Leitfähige Polymerzusammensetzung, umfassend:
das Pfropfpolymer nach einem der Ansprüche 1 bis 5, dotiert mit einem oder mehreren Salzen in einer Konzentration von 20 Gew.-% oder mehr, bezogen auf das Gesamtgewicht der Zusammensetzung.

14. Beschichtung, umfassend das Pfropfpolymer nach einem der Ansprüche 1 bis 5, wobei das Pfropfpolymer vernetzt ist oder eine Netzwerkstruktur aufweist.

15. Verwendung des Pfropfpolymers nach einem der Ansprüche 1 bis 5 als Tensid, lonomer, Antifoulingmittel, zur Erdölförderung, zur Wasserbehandlung, als Flockungsmittel, für die Hydrometallurgie, als Detergens, in einem pharmazeutischen Verfahren oder einer Kombination davon.

## Revendications

1. Polymère greffé comprenant :
i. un premier composant incluant un polymère formé par polymérisation d'un ou plusieurs monomères incluant un composé 1,1-disubstitué-1-alcène, lié à
ii. un deuxième composant qui est un composant hydrophile,
dans lequel le composant hydrophile inclut un cation ou un polymère hydrosoluble.

2. Polymère greffé selon la revendication 1, dans lequel le composant hydrophile est un polymère hydrosoluble sélectionné parmi le groupe constitué d'un polyacrylamide, un alcool polyvinylique, un acide polyacrylique, un polyalcoxyde, un polymère contenant une aminé hydrosoluble, un polyéthylèneimine, ou un polymère incluant des composés ammonium quaternaires, un copolymère de méthyl vynil éther et anhydride maléique, polyvinylpyrrolidone, un copolymère de celle-ci, ou une quelconque combinaison de ceux-ci.

3. Polymère greffé selon la revendication 1 ou 2, dans lequel le polymère greffé est **caractérisé par** une ou une quelconque des combinaisons suivantes :
i) 20 pour cent atomique ou plus de monomères du premier composant sont directement liés au deuxième composant ; ou
ii) le premier composant est présent dans une quantité de 10 pour cent en poids ou plus, par rapport au poids total du polymère greffé ; ou
iii) le deuxième composant est présent dans une quantité de 20 pour cent en poids ou plus, par rapport au poids total du polymère greffé ; ou
iv) la quantité totale du premier composant et du deuxième composant est 50 pour cent en poids ou plus, par rapport au poids total du polymère greffé.

4. Polymère greffé selon l'une quelconque des revendications 1 à 3, dans lequel le composé 1,1-disubstitué-1-alcène inclut un ou plusieurs 1,1-diester-1-alcènes, ayant une structure : 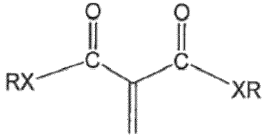 dans laquelle R est un groupe hydrocarbyle qui peut contenir un ou plusieurs hétéroatomes et X est de l'oxygène ou une liaison directe.

5. Polymère greffé selon l'une quelconque des revendications 1 à 4, dans lequel le composé 1,1-disubstitué-1-alcène est un malonate de méthylène ayant une structure : 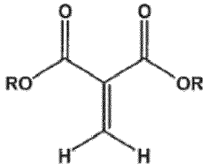 dans laquelle R est séparément en chaque occurrence alkyle, alcényl, cycloalkyle en C₃-C₉, hétérocyclyle, alkyle hétérocyclyle, aryle, aralkyle, alkaryle, hétéroaryle, ou alkhétéroaryle, ou polyoxyalkylène, ou les deux R forment un anneau cyclique ou hétérocyclique à 5-7 chaînons.

6. Composition polymère comprenant :
i) 10 pour cent ou plus de polymère greffé selon l'une quelconque des revendications 1 à 5, par rapport au poids total de la composition polymère ; et
ii) de 0,5 à environ 90 pour cent en poids d'un ou plusieurs composés sélectionnés parmi le groupe constitué d'une charge, un stabilisateur, un auxiliaire de traitement, un biocide, un polymère, un colorant, un sel, et une quelconque combinaison de ceux-ci.

7. Composition polymérisable incluant un composé 1,1-disubstitué-1-alcène greffé dans un polymère hydrosoluble pour la polymérisation du polymère greffé selon l'une quelconque des revendications 1 à 5, dans laquelle la composition polymérisable inclut 20 pour cent en poids ou plus de composés 1,1-disubstitué-1-alcène greffés.

8. Composition polymérisable selon la revendication 7, dans laquelle la composition polymérisable inclut un réticuleur pour la réticulation des composés 1,1-disubstitué-1-alcène.

9. Procédé de formation d'un composé greffé comprenant une étape consistant à greffer un composé 1,1-diester-1-alcène avec un composé ammonium quaternaire ou avec un polymère hydrosoluble, dans lequel l'étape de greffe est catalysée par un catalyseur acide ou un catalyseur enzymatique.

10. Procédé selon la revendication 9, dans lequel l'étape de greffe inclut une réaction de transestérification.

11. Procédé selon l'une quelconque des revendications 9 à 10, dans lequel le procédé inclut une étape de polymérisation de composés 1,1-diester-1-alcène.

12. Procédé de formation d'un polymère greffé incluant une étape de polymérisation de la composition polymérisable selon la revendication 7 ou 8, dans lequel l'étape de polymérisation est catalysée par tetraméthylguanidine.

13. Composition polymère conductrice comprenant :
le polymère greffé selon l'une quelconque des revendications 1 à 5 dopé avec un ou plusieurs sels à une concentration de 20 pour cent en poids ou plus, par rapport au poids total de la composition.

14. Revêtement comprenant le polymère greffé selon l'une quelconque des revendications 1 à 5, dans lequel le polymère greffé est réticulé ou a une structure réticulaire.

15. Utilisation du polymère greffé selon l'une quelconque des revendications 1 à 5 comme tensioactif, ionomère, agent antisalissures, pour la récupération de pétrole, pour le traitement des eaux, comme floculant, pour l'hydrométallurgie, comme détergent, dans un procédé pharmaceutique ou une quelconque combinaison de ceux-ci.
